# EUROPÄISCHE PATENTSCHRIFT

(11) **EP 1 274 978 B1**
(45) Veröffentlichungstag und Bekanntmachung des Hinweises auf die Patenterteilung: **23.06.2004**
(21) Anmeldenummer: 01931622.3
(22) Anmeldetag: 19.04.2001
(51) Int. Cl.: G01M 17/08, B61L 23/04

(54) **VERFAHREN UND VORRICHTUNG ZUM ÜBERWACHEN VON FAHREIGENSCHAFTEN EINES SCHIENENFAHRZEUGES**
METHOD AND DEVICE FOR MONITORING THE HANDLING CHARACTERISTICS OF A RAIL VEHICLE
PROCEDE ET DISPOSITIF POUR SURVEILLER LES CARACTERISTIQUES DE ROULEMENT D'UN VEHICULE SUR RAILS

(30) Priorität: 19.04.2000 DE 10020520
(43) Veröffentlichungstag der Anmeldung: 15.01.2003
(73) Patentinhaber: DB Reise & Touristik AG, 60326 Frankfurt (DE)
(72) Erfinder: SÄGLITZ, Mario, 12163 Berlin (DE); SUNDER, Reinhold, 85778 Haimhausen (DE); KOLBASSEFF, Alexander, 83527 Haag-Rosenberg (DE); KIENINGER, Kurt, 81827 München (DE); ACKERMANN, Thomas, 85368 Wang (DE)
(74) Vertreter: Zinken-Sommer, Rainer
(86) Internationale Anmeldenummer: PCT/EP2001/004428
(87) Internationale Veröffentlichungsnummer: WO 2001/084105

(56) Entgegenhaltungen:
- EP-A- 0 178 468
- WO-A-82/00805
- DE-A- 3 515 061
- DE-A- 19 502 670
- DE-A- 19 826 115
- DE-A- 19 836 081

## Beschreibung

Die Erfindung betrifft ein Verfahren und eine Vorrichtung zum Überwachen von Fahreigenschaften von Schienenfahrzeugen.

Aus der DE 198 37 476 A1 ist ein Verfahren bekannt, bei dem das Schall- und/oder Schwingungsverhalten während des bestimmungsgemäßen Einsatzes von Schienenfahrzeugen online erfasst wird und die erfassten Messergebnisse mit einem für eine jeweilige Fahrgeschwindigkeit geltenden Referenzwert verglichen werden. Die Referenzwerte werden insbesondere fahrortbezogen zur Verfügung gestellt. Bei dem bekannten Verfahren ist nachteilig, dass eine Auswertung der Signale nur über eine relativ komplizierte Frequenzanalyse erfolgen kann. Insbesondere bei Hochgeschwindigkeitszügen ist der durch die aufwendige Signalverarbeitung notwendige Zeitverlust zur möglichen Abwendung von Gefahren nicht zu tolerieren.

Weiterhin ist ein Fahrwerk für Schienenfahrzeuge bekannt, wobei am Fahrwerk mindestens ein Sensor angeordnet ist, aus dem oder aus denen Fahrwerksbeschleunigungen ermittelbar sind, welcher derart angebracht ist, daß Beschleunigungen parallel zur Laufradachse ermittelbar sind, und daß die Mittel zur elektrischen, elektropneumatischen oder elektrohydraulischen Beeinflussung der Fahrwerksdämpfung hinsichtlich ihres Stellhubes derart angebracht sind, daß der Stellhub senkrecht zum gemessenen Beschleunigungsvektor liegt (DE-PS 195 02 670 C2).

Der beschriebene Sensor dient ausschließlich zur Ansteuerung eines Stellgliedes einer Dämpfereinrichtung zur Beeinflussung der Fahrwerksdämpfung und nicht zur Überwachung von Fahreigenschaften eines Schienenfahrzeuges und nicht zur Erkennung von zu beachtenden Ereignissen, wie z.B. von Entgleisungen.

Zudem ist die Signalrichtung auf Beschleunigungen parallel bzw. antiparallel zur Laufachse beschränkt, was ein erheblicher Nachteil für einen umfassenden Einsatz darstellt.

Der Erfindung liegt die Aufgabe zugrunde, ein Verfahren und eine Vorrichtung der gattungsgemäßen Art zu schaffen, mittels denen in einfacher Weise eine Überwachung von Fahreigenschaften eines Schienenfahrzeuges möglich ist.

Erfindungsgemäß wird diese Aufgabe durch ein Verfahren mit den im Anspruch 1 genannten Merkmalen gelöst. Dadurch, dass eine Häufigkeitsverteilung von Beschleunigungswerten wenigstens einer Fahrzeugkomponente in einer vorgebbaren Zeitspanne erfasst und die Häufigkeit wenigstens eines Beschleunigungswertes mit einem vorgebbaren Häufigkeitswert verglichen wird und in Abhängigkeit einer Relation der Häufigkeit des wenigstens einen Beschleunigungswertes zu dem vorgegebenen Häufigkeitswert auf ein zu beachtendes Ereignis erkannt wird, lassen sich in einfacher Weise über eine Zeitauswertung die Fahreigenschaften von Schienenfahrzeugen überwachen.

In bevorzugter Ausgestaltung der Erfindung ist vorgesehen, dass die vorgebbare Zeitspanne (nachfolgend auch Zeitfenster genannt), innerhalb der die Häufigkeitsverteilung der Beschleunigungswerte erfasst wird, verändert werden kann. Insbesondere ist bevorzugt möglich, dass die Zeitspanne in Abhängigkeit von Fahrparametern, wie insbesondere eine Fahrgeschwindigkeit und/oder ein Zustand des Fahrweges (beispielsweise Weichenfahrt, Bogenfahrt, Rampenfahrt, Neubaustrecke, Altbaustrecke oder dergleichen) anpassbar ist. Durch diese Variation der Zeitspanne kann eine besonders genaue Überwachung der Fahreigenschaften erfolgen. Insbesondere können so in einfacher Weise die ermittelten Beschleunigungswerte im Verhältnis zu den gegebenen Parametern verifiziert werden, so dass die Genauigkeit der Erkennung eines zu beachtenden Ereignisses deutlich erhöht ist.

In weiterer bevorzugter Ausgestaltung der Erfindung ist vorgesehen, dass die vorgebbare Zeitspanne gleitend mitwandert, das heißt, aufeinander folgende Zeitspannen überlappen einander. So ist in einfacher Weise möglich, in Ist-Zeit eine ständige Aktualisierung der Häufigkeitsverteilung der Beschleunigungswerte innerhalb der vorgebbaren Zeitspanne durchzuführen. Die Genauigkeit der Überwachung wird hierdurch ebenfalls wesentlich verbessert. In weiterer bevorzugter Ausgestaltung der Erfindung ist vorgesehen, dass für die Häufigkeitsverteilung der Beschleunigungswerte innerhalb der vorgebbaren Zeitspanne eine Hüllkurve gebildet wird, die zumindest abschnittsweise mit einer Grenzwert-Hüllkurve verglichen wird. Insbesondere, wenn ein Abstand zwischen der Hüllkurve der gemessenen Beschleunigungswerte und der Grenzwert-Hüllkurve festgelegt wird, lässt sich die Häufigkeit bestimmter Beschleunigungswerte in besonders einfacher Weise zu der Grenzwert-Hüllkurve in Beziehung setzen. Ferner ist bevorzugt, dass die Grenzwert-Hüllkurve einen konstanten Abstand zu der Hüllkurve der gemessen Beschleunigungswerte beibehält. Hierdurch wird quasi eine Selbstlernfunktion in die Überwachung impliziert. Aufgrund der aktuellen Häufigkeitsverteilung der gemessenen Beschleunigungswerte kann so zumindest abschnittsweise eine Anpassung der Grenzwert-Hüllkurve erfolgen. Durch diese selbstlernende Anpassung der Grenzwert-Hüllkurve kann sehr vorteilhaft auf geänderte Randbedingungen, beispielsweise auf einen Austausch einzelner Fahrzeugkomponenten, beispielsweise einem Radsatz, reagiert werden, da konstruktionsbedingte und/oder verschleißbedingte Abweichungen zwischen an sich gleichartigen Fahrzeugkomponenten so bei der Überwachung der Fahrzeugeigenschaften berücksichtigt werden können. Die Sicherheit des Überwachungsverfahrens ist somit erheblich erhöht.

In weiterer bevorzugter Ausgestaltung der Erfindung ist vorgesehen, dass die Beschleunigungswerte insbesondere im Bereich der positiven und negativen Extremwerte überwacht werden. Hierdurch wird der Überwachungsaufwand reduziert, da beim Erkennen eines zu beachtenden Ereignisses, insbesondere eine Entgleisung oder ein sonstiger Schaden an einer Fahrzeugkomponente des Schienenfahrzeuges, zunächst mit einer Häufigkeitserhöhung in den Bereichen der Extremwerte zu rechnen ist. Da statistisch gesehen die Häufigkeit der Extremwerte im Verhältnis zur Häufigkeit der Mittelwerte geringer ist, führen hier schon geringe Häufigkeitsabweichungen innerhalb der vorgebbaren Zeitspanne zum Erkennen des zu beachtenden Ereignisses. Somit kann sehr kurzfristig auf das Ereignis, beispielsweise auf eine Entgleisung, erkannt werden und eine entsprechende Gegenmaßnahme, beispielsweise eine Schnellbremsung des Schienenfahrzeuges, eingeleitet werden.

In weiterer bevorzugter Ausgestaltung der Erfindung ist vorgesehen, dass eine Tendenz der Beschleunigungswerte über mehrere aufeinanderfolgende, vorgebbare Zeitspannen erfasst wird. Hierdurch lässt sich in einfacher Weise eine allmähliche Veränderung der Fahreigenschaften des Schienenfahrzeuges bei ansonsten gleichen Fahrparametern, beispielsweise Fahrgeschwindigkeit und Fahrwegzustand, erfassen. Somit kann ein zu beachtendes Ereignis aufgrund der geänderten Fahreigenschaften für die Zukunft vorhergesagt werden, so dass die Fahrsicherheit des Schienenfahrzeuges wesentlich erhöht werden kann.

Ferner ist in bevorzugter Ausgestaltung der Erfindung vorgesehen, dass das Beschleunigungsverhalten der wenigstens einen Fahrzeugkomponente in einer Raumrichtung, bevorzugterweise insbesondere in Fahrtrichtung, überwacht wird. Hierdurch wird der Gesamtaufwand zur Überwachung der Fahreigenschaften eines Schienenfahrzeuges weiter reduziert. Nach weiteren bevorzugten Ausgestaltungen der Erfindung kann jedoch auch vorgesehen sein, dass das Beschleunigungsverhalten der wenigstens einen Fahrzeugkomponente quer zur Fahrtrichtung und/oder senkrecht zur Fahrtrichtung und/oder in Fahrtrichtung überwacht wird. Hierdurch ergeben sich in jeder der überwachten drei Raumrichtungen Beschleunigungswerte, die einzeln der erfindungsgemäßen Auswertung unterzogen werden können. Hierdurch wird die Genauigkeit der Überwachung bei nur geringfügig erhöhtem Aufwand erhöht. Ferner kann vorgesehen sein, dass die Beschleunigungswerte in den drei Raumrichtungen miteinander verknüpft werden, um so die Aussagegenauigkeit des erfindungsgemäßen Verfahrens weiter zu erhöhen.

Erfindungsgemäß wird die Aufgabe ferner durch eine Vorrichtung mit den im Anspruch 16 genannten Merkmalen gelöst. Dadurch, dass Mittel zum Erfassen eines Beschleunigungsverhaltens wenigstens einer Fahrzeugkomponente eines Schienenfahrzeuges vorhanden sind, mittels denen eine Häufigkeitsverteilung von Beschleunigungswerten in einer vorgebbaren Zeitspanne erfassbar sind und die Häufigkeit wenigstens eines Beschleunigungswertes mit einem vorgebbaren Häufigkeitswert vergleichbar ist und bei Erreichen einer vorgebbaren Annäherung und/oder Abweichung von dem vorgegebenen Häufigkeitswert ein zu beachtendes Ereignis detektierbar ist, lässt sich in einfacher Weise eine Vorrichtung bereitstellen, mittels der eine exakte Überwachung der Fahreigenschaften eines Schienenfahrzeuges möglich ist. Insbesondere kann in bevorzugter Ausgestaltung vorgesehen sein, dass eine Auswerteeinrichtung in einem Schienenfahrzeug oder - bei einem Zugverband aus mehreren Schienenfahrzeugen - einem der Schienenfahrzeuge des Zugverbandes zugeordnet ist. Hierdurch lässt sich eine Überwachung für mehrere Schienenfahrzeuge, insbesondere auch für mehrere überwachte Fahrzeugkomponenten, in einfacher Weise gleichzeitig durchführen.

Die Erfindung ermöglicht insbesondere eine zustandsbezogene Instandhaltung von Komponenten von Schienenfahrzeugen. Das Überwachungsverfahren kann insbesondere kontinuierlich während des Einsatzes der Schienenfahrzeuge durchgeführt werden. Das Verfahren lässt sich in einfacher Weise in eine Onboard-Diagnose des Schienenfahrzeuges integrieren.

Weitere bevorzugte Ausgestaltungen der Erfindung ergeben sich aus den übrigen, in den abhängigen Ansprüchen genannten Merkmalen.

Die Erfindung wird nachfolgend in Ausführungsbeispielen anhand der zugehörigen Zeichnungen näher erläutert. Es zeigen:
- Figur 1: eine schematische Ansicht eines Schienenfahrzeuges;
- Figur 2: eine schematische Perspektivansicht eines Laufdrehgestelles eines Schienenfahrzeuges;
- Figur 3: ein Blockschaltbild einer Vorrichtung zum Überwachen von Fahreigenschaften des Schienenfahrzeuges und
- Figur 4: Hüllkurven von Beschleunigungswerten.

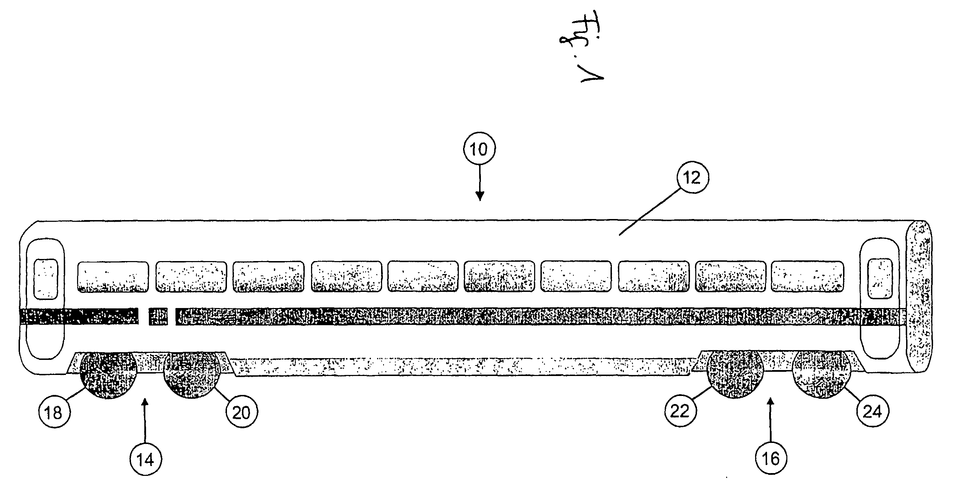

Figur 1 zeigt schematisch ein Schienenfahrzeug 10. Bei dem hier dargestellten Schienenfahrzeug 10 handelt es sich um einen Mittelwagen eines Hochgeschwindigkeitszuges. Die Erfindung wird lediglich beispielhaft anhand dieses Mittelwagens erläutert. Selbstverständlich lässt sich die Erfindung ohne Weiteres auf andere Schienenfahrzeuge, beispielsweise Triebfahrzeuge, Steuerwagen, Güterwagen oder dergleichen, übertragen.

Das Schienenfahrzeug 10 umfasst einen Wagenkasten 12, der auf zwei Laufdrehgestellen 14 und 16 gelagert ist. Die Laufdrehgestelle 14 und 16 umfassen jeweils Radsätze 18, 20, 22 und 24. Der allgemeine Aufbau derartiger Schienenfahrzeuge 10, insbesondere die Ankopplung des Wagenkastens 12 an die Laufdrehgestelle 14 und 16 beziehungsweise die Lagerung der Radsätze 18, 20, 22 und 24 an den Laufdrehgestellen 14 und 16 über primäre beziehungsweise sekundäre Feder/Dämpfersysteme, sind allgemein bekannt, so dass hierauf im Einzelnen im Rahmen der vorliegenden Beschreibung nicht näher eingegangen werden soll.

Während des Einsatzes des Schienenfahrzeuges 10 rollen die Radsätze über einen Fahrweg. Je nach Fahrgeschwindigkeit und Zustand des Fahrweges erfährt das Schienenfahrzeug 10 eine Schwingungsanregung. Diese Schwingungsanregung führt zu einem Schwingungsverhalten einzelner Komponenten des Schienenfahrzeuges 10. Entsprechend der Schwingungsanregung, die insbesondere abhängig ist von einer Geschwindigkeit des Schienenfahrzeuges und/oder einem Zustand des Fahrweges, erfahren die Komponenten des Schienenfahrzeuges eine Beschleunigung in den drei Raumrichtungen, also in x-Richtung, y-Richtung und z-Richtung. Gegenstand der Erfindung ist das Erfassen und Auswerten dieser Beschleunigungen in wenigstens einer Raumrichtung an wenigstens einer Komponente des Schienenfahrzeuges 10.

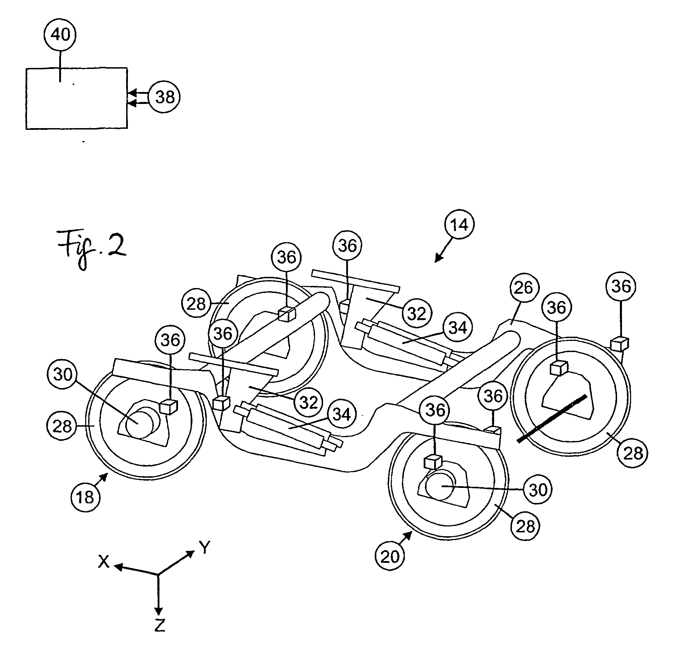

Figur 2 zeigt schematisch eine Perspektivansicht eines Laufdrehgestelles 14. Das Laufdrehgestell 14 umfasst einen Drehgestellrahmen 26, der über nicht dargestellte sekundäre Feder/Dämpfersysteme mit dem Wagenkasten 12 (Figur 1) verbunden ist. An dem Drehgestellrahmen 26 sind über ebenfalls nicht dargestellte primäre Feder/Dämpfersysteme die Radsätze 18 und 20 angeordnet. Die Radsätze 18 und 20 besitzen Räder 28, die über Radlager 30 gelagert sind. Ferner ist eine Schlingerdämpferkonsole 32 erkennbar, die am Wagenkasten 12 (Figur 1) befestigt ist. Die Schlingerdämpferkonsolen 32 sind über Schlingerdämpfer 34 mit dem Drehgestellrahmen 26 verbunden.

Dem Laufdrehgestell 14 sind hier jeweils schematisch angedeutete Schwingungsaufnehmer 36 zugeordnet. Die Schwingungsaufnehmer 36 können beispielsweise an den Radlagern 30, den Schlingerdämpferkonsolen 32 sowie an einer Klammerungsvorrichtung des Drehgestellrahmens 26 angeordnet sein. Die Schwingungsaufnehmer 36 sind als triaxiale Beschleunigungssensoren ausgebildet, die auf die einzelnen, mit den Schwingungsaufnehmern 36 ausgestatteten Fahrzeugkomponenten einwirkenden Beschleunigungen in den drei Raumrichtungen, also x-Richtung, y-Richtung und z-Richtung, detektieren. In Figur 1 ist hierzu ein Koordinatensystem mit den Raumrichtungen eingezeichnet. Die x-Richtung entspricht beispielsweise einer Fahrtrichtung des Schienenfahrzeuges 10, die z-Richtung einer senkrecht zur Fahrtrichtung liegenden Richtung und die y-Richtung einer quer zur Fahrtrichtung liegenden Richtung.
Die von den Beschleunigungssensoren 36 gelieferten Signale 38 werden einer in Figur 2 lediglich schematisch dargestellten Auswerteschaltung 40, die fahrzeuggebunden und/oder zuggebunden angeordnet sein kann, zugeführt. Anhand der von den Beschleunigungssensoren 36 gelieferten Signale 38 wird ein Beschleunigungsverhalten der einzelnen Fahrzeugkomponenten detektiert, um - wie nachfolgend noch erläutert wird - den Eintritt eines zu beachtenden Ereignisses zu erkennen. Ein zu beachtendes Ereignis kann beispielsweise eine Entgleisung des Schienenfahrzeuges 10, der plötzliche Auftritt eines Schadens an wenigstens einer der Fahrzeugkomponenten, eine Veränderung, insbesondere Verschlechterung, eines Zustandes wenigstens einer der Fahrzeugkomponenten oder dergleichen sein.

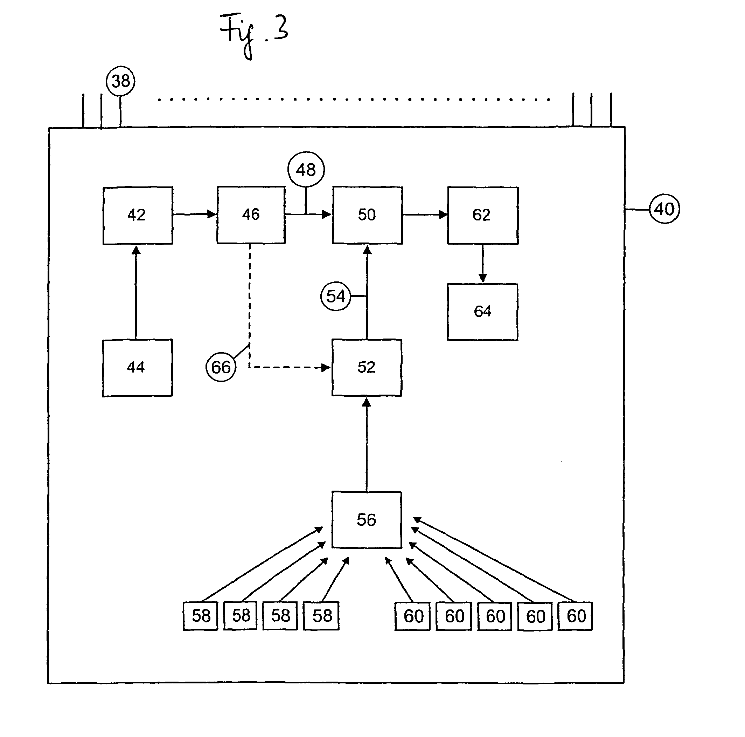

Figur 3 zeigt schematisch in einem Blockschaltbild die Auswerteschaltung 40. Die Auswerteschaltung 40 ist entweder in einem Schienenfahrzeug 10 angeordnet oder - bei einem Zugverband von mehreren Schienenfahrzeugen 10 - wenigstens einem der Schienenfahrzeuge, beispielsweise einem Triebfahrzeug, zugeordnet. Diese eine Auswerteschaltung 40 ist dann für die Überwachung des Fahrverhaltens aller Schienenfahrzeuge 10 des Zugverbandes zuständig. Die Übertragung der Signale 38 zu der wenigstens einen Auswerteschaltung 40 kann leitungsgebunden, beispielsweise über ein BUS-System, oder leitungslos erfolgen. Bei einer leitungslosen Übertragung ist vorteilhaft möglich, die Signale neben der zug- oder schienenfahrzeuggebundenen Auswerteschaltung gleichzeitig einer übergeordneten Leitstelle oder dergleichen zu übertragen.

Aufbau und Wirkungsweise der Beschleunigungssensoren 36 sind bekannt. Diese umfassen beispielsweise einen Piezoquarz, ein Kreiselsystem, eine federnd aufgehängte seismische Masse oder dergleichen, die bei einer beschleunigungsbedingten Auslenkung ein der Beschleunigung proportionales Signal liefert. Dieses Signal ist üblicherweise ein Spannungssignal.

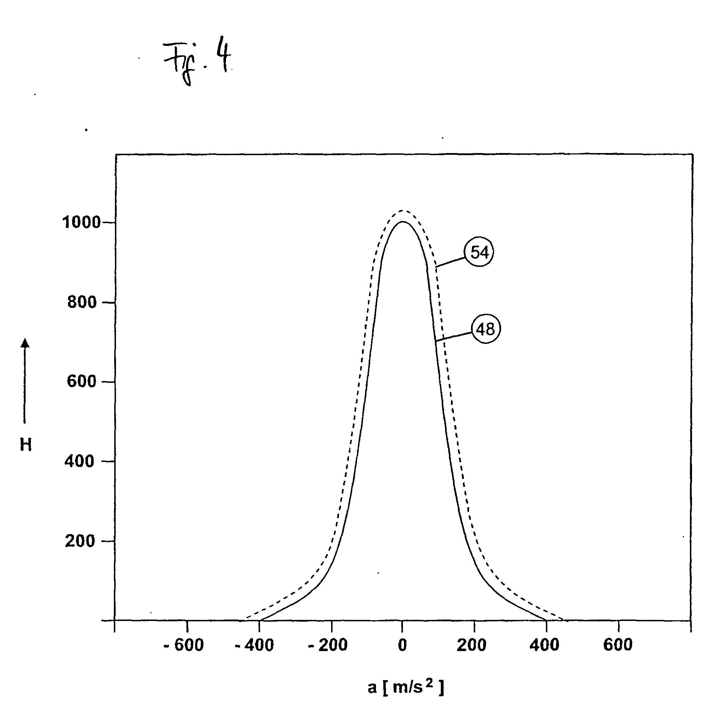

Die Signale 38 werden, wie Figur 3 zeigt, der Auswerteschaltung 40 zugeführt. Die Auswerteschaltung 40 umfasst eine Erfassungseinheit 42, die mit einer Zeitsteuereinheit 44 verbunden ist. Die Zeitsteuereinheit 44 kann eine Zeitspanne t vorgeben, innerhalb der eine Auswertung wenigstens eines der Signale 38 erfolgt. Diese Zeitspanne t beträgt beispielsweise < 1 s. Für diese vorgebbare Zeitspanne t wird das Signal 38 in einer Analyseeinheit 46 verarbeitet. Die Verarbeitung erfolgt derart, dass die Anzahl der innerhalb der vorgebbaren Zeitspanne t auftretenden Beschleunigungswerte ermittelt wird. Das heißt, innerhalb der Zeitspanne t wird die Häufigkeit jedes einzelnen Beschleunigungswertes des Signales 38 ermittelt. Diese Häufigkeit der einzelnen Beschleunigungswerte des Signales 38 innerhalb der vorgebbaren Zeitspanne t lässt sich in einem, in Figur 4 dargestellten Histogramm verdeutlichen. Entsprechend der beispielsweise im Millisekunden- oder Mikrosekundenabstand ermittelten momentanen Beschleunigungswerte a ergibt sich eine Häufigkeitsverteilung innerhalb der Zeitspanne t, wie diese beispielsweise in Figur 4 dargestellt ist. Die Häufigkeit H der Beschleunigungswerte a innerhalb der Zeitspanne t nimmt mit der Höhe der absoluten Beschleunigungswerte a, sowohl in positiver als auch in negativer Richtung, ab. Anhand der lediglich beispielhaft gezeigten Darstellung in Figur 4 ergibt sich eine Hüllkurve 48, die die jeweiligen Häufigkeiten H der einzelnen Beschleunigungswerte a miteinander verbindet. Der Beschleunigungswert a = 0 m/s² tritt hierbei am häufigsten auf, beispielsweise tausendmal, während ein Minimum der Häufigkeit H beispielsweise bei den Beschleunigungswerten a = -400 m/s² beziehungsweise +400 m/s² liegt.

Diese, von der Analyseeinheit 46 ermittelte Hüllkurve 48 wird einem Vergleicher 50 übergeben, der die Hüllkurve 48 - zumindest bereichsweise, wie später noch erläutert wird - mit einer, von einem Speicher 52 zur Verfügung gestellten Vergleichs- beziehungsweise Grenzwert-Hüllkurve 54 vergleicht.

In Figur 4 ist gestrichelt beispielsweise eine mögliche Vergleichs-Hüllkurve 54 eingetragen. Zu jedem Beschleunigungswert a besitzt die Vergleichs-Hüllkurve 54 einen größeren Häufigkeitswert H₅₄. Dies bedeutet, bei jedem Beschleunigungswert a besteht eine Differenz zwischen der Häufigkeit H₅₄ der Vergleichs-Hüllkurve und der Ist-Häufigkeit H₄₈ des ausgewerteten Signales 38.

Da bei Erkennen eines zu beachtenden Ereignisses, beispielsweise einer Entgleisung, relativ hohe Beschleunigungswerte a auftreten, kann zur Vereinfachung vorgesehen sein, dass die Überwachung der Ist-Hüllkurve H₄₈ lediglich im Bereich hoher Beschleunigungswerte a durchgeführt wird. Eine Erhöhung der Häufigkeit H für kleinere Beschleunigungswerte a führt erfahrungsgemäß nicht zum Eintritt des zu beachtenden Ereignisses. Jedoch kann neben einer mittels der erläuterten Hüllkurvenanalyse durchgeführten Entgleisungsdetektion durch Überwachen der Hüllkurve H₄₈ im Bereich kleiner Beschleunigungswerte a ein Langzeittrend ausgewertet werden, so dass bei der gleichen Fahrzeugkomponente und bei gleichen - noch zu erläuternden - Randbedingungen ein verändertes Beschleunigungsverhalten erkennbar ist. Dieses kann beispielsweise infolge einer sich langsam ändernden Eigenschaft, beispielsweise von Materialermüdungen, Verschleiß oder dergleichen herrührende Änderung des Beschleunigungsverhaltens, sein. Dieses wird somit in einfacher Weise frühzeitig erkennbar.

Dem Speichermittel 52 ist ein Aktivierungsmittel 56 zugeordnet, das den Verlauf der Vergleichs-Hüllkurve 54 geschwindigkeitsabhängig und/oder fahrwegabhängig aufruft. Das Aktivierungsmittel 56 teilt dem Speichermittel 52 quasi mit, welche aktuelle momentane Geschwindigkeit des Schienenfahrzeuges 10 und/oder welche aktuellen momentanen Fahrwegparameter zu beachten sind. Entsprechend der Geschwindigkeit und/oder dem Fahrweg ergibt sich ein unterschiedlicher Verlauf der Vergleichs-Hüllkurve 54.
Die momentane Geschwindigkeit kann hierbei unterschiedlichen Geschwindigkeitsstufen/Geschwindigkeitsklassen zugeordnet werden. Figur 3 verdeutlicht, dass beispielsweise vier Geschwindigkeitsstufen 58 vorgesehen sein können. Eine erste Geschwindigkeitsstufe umfasst beispielsweise eine Geschwindigkeit von 0 bis 70 km/h, eine zweite Geschwindigkeitsstufe eine Geschwindigkeit von 70 bis 140 km/h, eine dritte Geschwindigkeitsstufe eine Geschwindigkeit von 140 bis 210 km/h und eine vierte Geschwindigkeitsstufe eine Geschwindigkeit > 210 km/h. Selbstverständlich ist es möglich, die Anzahl der Geschwindigkeitsstufe 58 anders festzulegen. Beispielsweise kann eine feinere Unterteilung in kleinere Geschwindigkeitsstufen oder auch eine gröbere Unterteilung in weniger Geschwindigkeitsstufen erfolgen. Die Auswahl der Geschwindigkeitsstufe 58 kann beispielsweise durch eine Ist-Geschwindigkeitsmessung des Schienenfahrzeuges 10 ausgelöst werden.

Die fahrwegabhängige Aktivierung des Speichermittels 52 kann beispielsweise über hier angedeutete Fahrwegstufen 60 erfolgen. Hierbei ist beispielsweise eine Fahrwegstufe einer Neubaustrecke, eine Fahrwegstufe einer Altbaustrecke, eine Fahrwegstufe einer Ausbaustrecke, eine Fahrwegstufe einem Fahrwegbogen, eine Fahrwegstufe einem Weichenabschnitt oder dergleichen zugeordnet. Möglich ist auch, gleichzeitig mehr als eine Fahrwegstufe zu aktivieren, so dass sich beispielsweise Kombinationen für die Vorgabe der Vergleichs-Hüllkurve 54 ergeben.

Der Vergleicher 50 vergleicht nunmehr die einem Signal 38 entsprechende Ist-Hüllkurve 48 beziehungsweise eines Abschnittes der Ist-Hüllkurve 48 mit der entsprechend ausgewählten und zugeordneten Vergleichs-Hüllkurve 54 beziehungsweise eines Abschnittes der Vergleichs-Hüllkurve 54. Der Vergleich kann dahingehend ausgelegt sein, dass die Vergleichs-Hüllkurve 54 als Grenzwert-Hüllkurve gilt, das heißt, bei Erreichen wenigstens eines durch die Grenzwert-Hüllkurve vorgegebenen Grenzwertes gilt das zu detektierende Ereignis als eingetreten. Ferner ist möglich, dass ein Abstand (Differenz) wenigstens eines der Häufigkeitswerte H₅₄ und H₄₈ überwacht wird. Ergibt sich hierbei, dass die Häufigkeit H₄₈ die Häufigkeit H₅₄ erreicht oder eine Differenz der Häufigkeit H₅₄ und der Häufigkeit H₄₈ einen vorgebbaren Differenz-Grenzwert unterschreitet, wird über ein Diagnosemittel 62 auf ein zu beachtendes Ereignis erkannt. Dies kann, wie bereits erläutert, beispielsweise eine Entgleisung des Schienenfahrzeuges 10 oder ein erheblicher Fehler wenigstens einer Fahrzeugkomponente sein. Bei Entgleisungserkennung wird unmittelbar eine Sofortreaktion ausgelöst, die beispielsweise im Auslösen eines Bremsvorganges des Schienenfahrzeuges 10 besteht.

Durch Aufzeichnen der Ist-Hüllkurven 48 und/oder der Vergleiche lässt sich neben der Ist-Überwachung des Fahrverhaltens des Schienenfahrzeuges 10 eine statistische Auswertung über der Zeit (Trendanalyse) durchführen. Ein Speichermittel 64, beispielsweise ein beschreibbarer Datenträger, wie Magnetband, Compactdisc, Festplatte oder dergleichen, kann zur Aufzeichnung der Signalauswertung in der Auswerteschaltung 40 integriert sein.

wie bereits erläutert, erfolgt die Auswertung des Signales 38 für eine vorgebbare Zeitspanne t. Diese Zeitspanne t kann beispielsweise ebenfalls geschwindigkeitsabhängig und/oder fahrwegabhängig variiert werden. So kann beispielsweise bei einer höheren Geschwindigkeit die Zeitspanne t verringert werden, da somit die Sicherheit der Auswertung erhöht wird. Bei höherer Geschwindigkeit wird in gleicher Zeit eine längere Fahrstrecke zurückgelegt, so dass durch Verringerung der Überwachungs-Zeitspanne t eine schnellere Detektion eines etwaigen zu beachtenden Ereignisses möglich ist.

Um eine lückenlose Überwachung zu gewährleisten, kann vorgesehen sein, dass mehrere Zeitspannen t versetzt beziehungsweise verschachtelt zueinander gestartet werden. Diese bedeutet, eine Zeitdifferenz zwischen hintereinander liegenden Startzeitpunkten der jeweiligen Zeitspanne t ist geringer als die Zeitspanne t. Es ist jedoch auch möglich, nach Ablauf einer Zeitspanne t die nächste Überwachungs-Zeitspanne t zu starten.

Wie in Figur 3 mit einer gestrichelt dargestellten Verbindungslinie 66 angedeutet, kann dem Speichermittel 52 von der Analyseeinheit 46 das aufbereitete Signal 38, das heißt die Ist-Hüllkurve 48, als Korrekturwert zugeführt werden. Durch diese zusätzliche Kopplung ist das System selbstlernend ausgebildet. So kann beispielsweise durch Austausch einzelner Fahrzeugkomponenten, beispielsweise durch turnusmäßigen Austausch der Radsätze 18, 20, ein verändertes Beschleunigungsverhalten bei ansonsten gleichen äußeren Bedingungen auftreten. Dieses veränderte Beschleunigungsverhalten schlägt sich in einer veränderten Ist-Hüllkurve 48 nieder. Dadurch, dass das Speichermittel 52 über eine derartig veränderte Ist-Hüllkurve 48 informiert ist, kann eine entsprechende Anpassung der Vergleichs-Hüllkurve 54 unabhängig und zusätzlich zu den Geschwindigkeitsstufen 58 und/oder Fahrwegstufen 60 erfolgen.

Die den einzelnen Vergleichs-Hüllkurven 54 zugrunde liegenden Häufigkeiten H₅₄ der einzelnen Beschleunigungswerte a₅₄ können durch Messfahrten und/oder Modellrechnungen erhalten werden.

Veränderungen der Ist-Hüllkurve 48, insbesondere auch in Teilbereichen - also für bestimmte Beschleunigungswerte a -, die plötzlich oder allmählich auftreten, können weiterhin als Indiz für eine eintretende Schädigung anderer, den wenigstens einen Schwingungsaufnehmer nicht aufweisender Fahrzeugkomponenten gelten. Das eigentlich zu detektierende Ereignis, beispielweise eine Entgleisung oder ein Verschleiß der überwachten Komponenten, tritt nicht ein, aber dennoch ist eine Veränderung der Ist-Hüllkurve festgestellt. Dies kann beispielsweise aus Schwingungsüberlagerungen von anderen Fahrzeugkomponenten herrühren. Jede Veränderung der Ist-Hüllkurve muss quasi eine Ursache haben.

## Patentansprüche

1. Verfahren zur Überwachung von Fahreigenschaften eines Schienenfahrzeuges, wobei ein Beschleunigungsverhalten wenigstens einer Fahrzeugkomponente überwacht wird, **dadurch gekennzeichnet, dass** eine Häufigkeitsverteilung von Beschleunigungswerten wenigstens einer Fahrzeugkomponente in einer vorgebbaren Zeitspanne (t) erfasst und die Häufigkeit (H) wenigstens eines Beschleunigungswertes (a) mit einem vorgebbaren Häufigkeitswert verglichen wird und in Abhängigkeit einer Relation der Häufigkeit (H) des wenigstens einen Beschleunigungswertes (a) zu dem vorgegebenen Häufigkeitswert (H₅₄) auf ein zu beachtendes Ereignis erkannt wird.

2. Verfahren nach Anspruch 1, **dadurch gekennzeichnet, dass** die Zeitspanne (t) verändert werden kann.

3. Verfahren nach einem der vorhergehenden Ansprüche, **dadurch gekennzeichnet, dass** die Zeitspanne (t) in Abhängigkeit von Fahrparametern, insbesondere einer Fahrgeschwindigkeit und/oder dem Zustand eines Fahrweges, verändert werden kann.

4. Verfahren nach einem der vorhergehenden Ansprüche, **dadurch gekennzeichnet, dass** die Zeitspanne (t) aufeinander folgend neu zu laufen beginnt.

5. Verfahren nach einem der vorhergehenden Ansprüche, **dadurch gekennzeichnet, dass** die Zeitspanne (t) überlappend neu zu laufen beginnt.

6. Verfahren nach einem der vorhergehenden Ansprüche, **dadurch gekennzeichnet, dass** entsprechend der Häufigkeit (H) der Beschleunigungswerte (a) in einer Zeitspanne (t) eine Hüllkurve (48) gebildet wird.

7. Verfahren nach einem der vorhergehenden Ansprüche, **dadurch gekennzeichnet, dass** die Hüllkurve (48) zumindest abschnittsweise mit einer Vergleichs-Hüllkurve (54) verglichen wird.

8. Verfahren nach einem der vorhergehenden Ansprüche, **dadurch gekennzeichnet, dass** ein Häufigkeits-Abstand zwischen der Hüllkurve (48) und der Vergleichs-Hüllkurve (54) konstant bleibt.

9. Verfahren nach einem der vorhergehenden Ansprüche, **dadurch gekennzeichnet, dass** ein Häufigkeits-Abstand zwischen der Hüllkurve (48) und der Vergleichs-Hüllkurve (54) verändert werden kann.

10. Verfahren nach Anspruch 9, **dadurch gekennzeichnet, dass** die Veränderung in Abhängigkeit der Fahrparameter erfolgt.

11. Verfahren nach einem der vorhergehenden Ansprüche, **dadurch gekennzeichnet, dass** die Häufigkeit (H) der Beschleunigungswerte (a) im Bereich der positiven und negativen Extremwerte überwacht wird.

12. Verfahren nach einem der vorhergehenden Ansprüche, **dadurch gekennzeichnet, dass** eine Tendenz der Beschleunigungswerte (a) über wenigstens zwei Zeitspannen (t) bei gleichen Fahrparametern überwacht wird.

13. Verfahren nach einem der vorhergehenden Ansprüche, **dadurch gekennzeichnet, dass** das Beschleunigungsverhalten der wenigstens einen Fahrzeugkomponente in wenigstens einer Raumrichtung überwacht wird.

14. Verfahren nach einem der vorhergehenden Ansprüche, **dadurch gekennzeichnet, dass** das Beschleunigungsverhalten der wenigstens einen Fahrzeugkomponente in Fahrtrichtung (x-Richtung) überwacht wird.

15. Verfahren nach einem der vorhergehenden Ansprüche, **dadurch gekennzeichnet, dass** das Beschleunigungsverhalten der wenigstens einen Fahrzeugkomponente in allen drei Raumrichtungen überwacht wird.

16. Verfahren nach einem der vorhergehenden Ansprüche, **dadurch gekennzeichnet, dass** das Verfahren als Onboard-Überwachung/Diagnose durchgeführt wird.

17. Verfahren nach einem der vorhergehenden Ansprüche, **dadurch gekennzeichnet, dass** das Verfahren kontinuierlich während des bestimmungsgemäßen Einsatzes des Schienenfahrzeuges durchgeführt wird.

18. Verfahren nach einem der vorhergehenden Ansprüche, **dadurch gekennzeichnet, dass** durch das Verfahren eine Entgleisung als Ereignis detektiert wird.

19. Verfahren nach einem der vorhergehenden Ansprüche, **dadurch gekennzeichnet, dass** durch das Verfahren ein Verschleiß wenigstens einer Fahrzeugkomponente als Ereignis detektiert wird.

20. Vorrichtung zur Überwachung von Fahreigenschaften eines Schienenfahrzeuges, mit Mitteln zum Erfassen eines Beschleunigungsverhaltens wenigstens einer Fahrzeugkomponente des Schienenfahrzeuges, **gekennzeichnet dadurch, dass** durch diese Mittel eine Häufigkeitsverteilung von Beschleunigungswerten (a) in einer vorgebbaren Zeitspanne (t) erfassbar sind und die Häufigkeit (H) wenigstens eines Beschleunigungswertes (a) mit einem vorgebbaren Häufigkeitswert (H₅₄) vergleichbar ist und bei Erreichen des vorgebbaren Häufigkeitswertes (H₅₄) oder bei Erreichen einer vorgebbaren Annäherung und/oder Abweichung von dem Häufigkeitswert (H₅₄) ein zu beachtendes Ereignis detektierbar ist.

21. Vorrichtung nach Anspruch 20, **dadurch gekennzeichnet, dass** eine Auswerteeinrichtung (40) der Vorrichtung in dem Schienenfahrzeug (10) angeordnet ist.

22. Vorrichtung nach Anspruch 20, **dadurch gekennzeichnet, dass** bei einem Zugverband aus wenigstens zwei Schienenfahrzeugen (10) eine zuggebundene Auswerteeinrichtung (40) vorgesehen ist.

23. Vorrichtung nach Anspruch 20, **dadurch gekennzeichnet, dass** bei einem Zugverband jedes Schienenfahrzeug (10) eine Auswerteeinrichtung (40) aufweist und zusätzlich eine zuggebundene Auswerteeinrichtung (40) vorgesehen ist.

## Claims

1. A method for monitoring the handling characteristics of a rail vehicle, wherein an acceleration behavior of at least one vehicle component is monitored, **characterized in that** a frequency distribution of acceleration values of at least one vehicle component is determined within a predetermined duration (t) and the frequency (H) of at least one acceleration value (a) is compared with a predetermined frequency value, and **in that** an event requiring attention is detected in dependence on a relation between the frequency (H) of the at least one acceleration value (a) and the predetermined frequency value (H₅₄).

2. The method according to Claim 1, **characterized in that** the duration (t) is variable.

3. The method according to one of the preceding claims, **characterized in that** the duration (t) is variable in dependence on handling parameters, in particular, a traveling speed and/or the condition of a track.

4. The method according to one of the preceding claims, **characterized in that** the duration (t) begins anew in a successive fashion.

5. The method according to one of the preceding claims, **characterized in that** the duration (t) begins anew in an overlapping fashion.

6. The method according to one of the preceding claims, **characterized in that** an envelope (48) is generated in accordance with the frequency (H) of the acceleration values (a) within a duration (t).

7. The method according to one of the preceding claims, **characterized in that** the envelope (48) is compared at least sectionally with a reference envelope (54).

8. The method according to one of the preceding claims, **characterized in that** a frequency spread between the envelope (48) and the reference envelope (54) remains constant.

9. The method according to one of the preceding claims, **characterized in that** a frequency spread between the envelope (48) and the reference envelope (54) is variable.

10. The method according to Claim 9, **characterized in that** the variation takes place in dependence on the handling parameters.

11. The method according to one of the preceding claims, **characterized in that** the frequency (H) of the acceleration values (a) is monitored in the range of positive and negative extreme values.

12. The method according to one of the preceding claims, **characterized in that** a tendency of the acceleration values (a) is monitored over at least two durations (t) at identical handling parameters.

13. The method according to one of the preceding claims, **characterized in that** the acceleration behavior of the at least one vehicle component is monitored in at least one direction in space.

14. The method according to one of the preceding claims, **characterized in that** the acceleration behavior of the at least one vehicle component is monitored in the traveling direction (x-direction).

15. The method according to one of the preceding claims, **characterized in that** the acceleration behavior of the at least one vehicle component is monitored in all three directions in space.

16. The method according to one of the preceding claims, **characterized in that** the method is carried out in the form of an on-board monitoring method/diagnosis.

17. The method according to one of the preceding claims, **characterized in that** the method is carried out continuously during the intended use of the rail vehicle.

18. The method according to one of the preceding claims, **characterized in that** the event detected with the method is a derailment.

19. The method according to one of the preceding claims, **characterized in that** the event detected with the method is the wearout of at least one vehicle component.

20. A device for monitoring the handling characteristics of at least one rail vehicle, with means for determining an acceleration behavior of at least one vehicle component of the rail vehicle, **characterized in that** said means make it possible to determine a frequency distribution of acceleration values (a) within a predicament duration (t), wherein the frequency (H) of at least one acceleration value (a) is compared with a predetermined frequency value (H₅₄), and wherein an event requiring attention is detected when the predetermined frequency value (H₅₄) is reached or when a predetermined proximity to and/or deviation from the frequency value (H₅₄) is reached.

21. The device according to Claim 20, **characterized in that** an evaluation unit (40) of the device is arranged in the rail vehicle (10).

22. The device according to Claim 20, **characterized in that** a train-bound evaluation unit (40) is provided in a train consisting of at least two rail vehicles (10).

23. The device according to Claim 20, **characterized in that** each rail vehicle (10) of a train contains an evaluation unit (40), and **in that** an additional train-bound evaluation unit (40) is provided.

## Revendications

1. Procédé de contrôle des propriétés de circulation d'un véhicule ferroviaire, un comportement à l'accélération d'au moins une composante du véhicule étant contrôlé, **caractérisé en ce qu'**une répartition de fréquence de valeurs d'accélération d'au moins une composante du véhicule est enregistrée dans une fourchette de temps (t) prédéfinissable et que la fréquence (H) d'au moins une valeur d'accélération (a) est comparée à une valeur de fréquence prédéfinissable et qu'un événement à prendre en compte est identifié en fonction d'une relation de la fréquence (H) de l'au moins une valeur d'accélération (a) avec la valeur de fréquence prédéfinie (H₅₄).

2. Procédé selon la revendication 1, **caractérisé en ce que** la fourchette de temps (t) peut être modifiée.

3. Procédé selon l'une quelconque des revendications précédentes, **caractérisé en ce que** la fourchette de temps (t) peut être modifiée en fonction de paramètres de circulation, notamment une vitesse de circulation, et/ou de l'état d'une voie de circulation.

4. Procédé selon l'une quelconque des revendications précédentes, **caractérisé en ce que** la fourchette de temps (t) recommence à courir de manière successive.

5. Procédé selon l'une quelconque des revendications précédentes, **caractérisé en ce que** la fourchette de temps (t) recommence à courir avec un chevauchement.

6. Procédé selon l'une quelconque des revendications précédentes, **caractérisé en ce qu'**en fonction de la fréquence (H) des valeurs d'accélération (a), une courbe enveloppante (48) est constituée dans une fourchette de temps (t).

7. Procédé selon l'une quelconque des revendications précédentes, **caractérisé en ce que** la courbe enveloppante (48) est comparée du moins par sections à une courbe enveloppante comparative (54).

8. Procédé selon l'une quelconque des revendications précédentes, **caractérisé en ce qu'**un écart de fréquence entre la courbe enveloppante (48) et la courbe enveloppante comparative (54) reste constant.

9. Procédé selon l'une quelconque des revendications précédentes, **caractérisé en ce qu'**un écart de fréquence entre la courbe enveloppante (48) et la courbe enveloppante comparative (54) peut être modifié.

10. Procédé selon la revendication 9, **caractérisé en ce que** la modification a lieu en fonction des paramètres de circulation.

11. Procédé selon l'une quelconque des revendications précédentes, **caractérisé en ce que** la fréquence (H) des valeurs d'accélération (a) est contrôlée au niveau des valeurs extrêmes positives et négatives.

12. Procédé selon l'une quelconque des revendications précédentes, **caractérisé en ce qu'**une tendance des valeurs d'accélération (a) est contrôlée sur au moins deux fourchettes de temps (t) avec les mêmes paramètres de circulation.

13. Procédé selon l'une quelconque des revendications précédentes, **caractérisé en ce que** le comportement à l'accélération de l'au moins une composante du véhicule est contrôlé dans au moins une direction spatiale.

14. Procédé selon l'une quelconque des revendications précédentes, **caractérisé en ce que** le comportement à l'accélération de l'au moins une composante du véhicule est contrôlé dans le sens de circulation (sens x).

15. Procédé selon l'une quelconque des revendications précédentes, **caractérisé en ce que** le comportement à l'accélération de l'au moins une composante du véhicule est contrôlé dans les trois directions spatiales.

16. Procédé selon l'une quelconque des revendications précédentes, **caractérisé en ce que** le procédé est réalisé sous forme de contrôle/diagnostic à bord.

17. Procédé selon l'une quelconque des revendications précédentes, **caractérisé en ce que** le procédé est réalisé en continu pendant l'usage conforme à la destination du véhicule ferroviaire.

18. Procédé selon l'une quelconque des revendications précédentes, **caractérisé en ce qu'**un déraillement est détecté comme événement par le procédé.

19. Procédé selon l'une quelconque des revendications précédentes, **caractérisé en ce qu'**une usure d'au moins une composante du véhicule est détectée comme événement par le procédé.

20. Dispositif de contrôle des propriétés de circulation d'un véhicule ferroviairecomportant des moyens d'enregistrement d'un comportement à l'accélération d'au moins une composante du véhicule du véhicule ferroviaire, **caractérisé en ce qu'**on peut enregistrer par ces moyens une répartition de fréquence de valeurs d'accélération (a) dans une fourchette de temps prédéfinie (t) et que la fréquence (H) d'au moins une valeur d'accélération (a) est comparable à une valeur de fréquence prédéfinissable (H₅₄) et qu'en cas d'atteinte de la valeur de fréquence prédéfinissable (H₅₄) ou en cas d'atteinte d'une approximation et/ou d'un écart prédéfinissable par rapport à la valeur de fréquence (H₅₄), un événement à prendre en compte est détectable.

21. Procédé selon la revendication 20, **caractérisé en ce qu'**un dispositif d'exploitation (40) du dispositif est disposé dans le véhicule ferroviaire (10).

22. Procédé selon la revendication 20, **caractérisé en ce que**, dans un convoi ferroviaire composé d'au moins deux véhicules ferroviaires (10), il est prévu un dispositif d'exploitation relié au train (40).

23. Procédé selon la revendication 20, **caractérisé en ce que**, dans un convoi ferroviaire, chaque véhicule ferroviaire (10) présente un dispositif d'exploitation (40) et qu'il est prévu en plus un dispositif d'exploitation relié au train (40).
